# EUROPÄISCHE PATENTANMELDUNG

(11) **EP 2 110 423 A1**
(43) Veröffentlichungstag der Anmeldung: **21.10.2009**
(21) Anmeldenummer: 08007656.5
(22) Anmeldetag: 18.04.2008
(51) Int. Cl.: C09J 133/00

(54) **Hydrophiler Klebedeckel zur Deckelung von fluidischen Devices**

(71) Anmelder: Roche Diagnostics GmbH, 68305 Mannheim (DE); F. Hoffmann-La Roche AG, 4070 Basel (CH)
(72) Erfinder: Brauner, Michael, 66842 Bürstadt (DE)
(74) Vertreter: Dey, Michael

(57) **Zusammenfassung**

Die vorliegende Erfindung betrifft eine neue Klebstoffmischung und insbesondere eine Klebstoffmischung, die zur Herstellung von Testelementen eingesetzt werden kann.

## Beschreibung

Die vorliegende Erfindung betrifft eine neue Klebstoffmischung und insbesondere eine Klebstoffmischung, die zur Herstellung von Testelementen eingesetzt werden kann.

Testelemente werden häufig in der Diagnostik, insbesondere in der medizinischen Diagnostik eingesetzt. Testelemente können beispielsweise verwendet werden, um verschiedene Parameter wie etwa Glucose, Cholesterin, Proteine, Ketone, Phenylalanin oder Enzyme in biologischen Flüssigkeiten, wie etwa Blut, Speichel oder Urin, nachzuweisen oder qualitativ oder quantativ zu bestimmen. Dabei werden für solche Testelemente oder Systeme grundsätzlich zwei Klassen unterschieden, nämlich Analysensysteme, die mit Nassreagenzien arbeiten, und Systeme, die mit Trockenreagenzien arbeiten. Im Bereich der medizinischen Diagnostik werden Analysensysteme oder Testelemente mit Trockenreagenzien, insbesondere in Form von Testträgern, z.B. Teststreifen, oder in Form von scheibenförmigen Testträgern angeboten. Bei den Testelementen muss dabei die Probe zumeist von einem Auftragungsort zu einem Reaktions- oder Detektionsort wandern. Der Transport der Probe kann über externe Kräfte, beispielsweise durch Fliehkräfte oder durch Kapillarkräfte erfolgen. Der Transport durch Kapillarkräfte hat den Vorteil, dass die Probe "selbstständig" vom Auftrageort zum gewünschten Weiterverarbeitungsort wandert, ohne dass von außen weitere Maßnahmen erforderlich sind.

Allerdings müssen dazu die in den Testelementen vorgesehenen Kanäle entsprechend ausgestaltet sein, um eine Wanderung der Probeflüssigkeit, bei der es sich zumeist um eine wässrige Flüssigkeit handelt, innerhalb des Testelements zu erlauben. Herkömmliche Materialien, aus denen Testelemente aufgebaut sind, sind jedoch oftmals nicht ausreichend hydrophil, um tatsächlich einen Kapillarfluss von wässrigen Flüssigkeiten zu ermöglichen.

Testelemente, beispielsweise fluidische Testelemente, sind üblicherweise aus mehreren Schichten oder Lagen aufgebaut, die miteinander verbunden werden. Durch den Mehrschichtaufbau können die in dem Testelement gewünschten Strukturen bereitgestellt werden. Das Verbinden der einzelnen Schichten sowie das Abdecken der Testelement können mit verschiedenen Techniken durchgeführt werden, wie beispielsweise Ultraschall-Verschweißen, Heißsiegelverfahren oder Verbindung und/oder Abdeckung durch eine Klebefolie.

Beim Ultraschall-Verschweißen sind hohe Anlagen- und Werkzeugkosten nachteilig. Zudem besteht keine Flexibilität bei Designänderungen, sondern die Sonotrode muss bei Änderungen des Design jeweils neu hergestellt werden. Zudem ist eine Hydrophilisierung des Elements bzw. des Deckels erforderlich.

Beim Laserschweißen entstehen ebenfalls hohe Anlagekosten und auch hier ist eine universelle Anpassung bei Designänderungen des fluidischen Testelements nicht ohne Weiteres machbar. Bei einer Designänderung des Devices muss vielmehr eine Maskenänderung für den Deckel durchgeführt werden. Auch beim Laserschweißen ist eine Hydrophilisierung des Testelements bzw. des Deckels erforderlich.

Beim Heißsiegelverfahren ist die damit einhergehende thermische Einwirkung auf im Testelement vorliegende Reagenzien nachteilig. Aus diesem Grunde ist das Verfahren nur für thermostabile Reagenzien überhaupt anwendbar. Auch bei diesem Verfahren ist eine Hydrophilisierung des Testelements bzw. des Deckels erforderlich.

Eine Aufgabe der vorliegenden Erfindung war es, ein Deckelungsverfahren für Testsysteme bereitzustellen, mit welchem die Nachteile des Standes der Technik zumindest teilweise beseitigt werden können.

Zur Lösung dieser Aufgabe wurde eine Klebstoffmischung entwickelt, welche insbesondere in Ausgestaltung einer Klebefolie als Deckel für Testelemente Verwendung finden kann.

Ein Gegenstand der vorliegenden Erfindung ist deshalb eine Klebstoffmischung umfassend (i) einen Acrylkleber und (ii) ein Detergenz.

Die erfindungsgemäße Klebstoffmischung kann beispielsweise in Form einer Klebefolie als Deckel für Testelemente eingesetzt werden. Vorteilhaft ist dabei, dass die Klebstoffmischung neben klebenden Eigenschaften auch stark hydrophile Eigenschaften zeigt. Durch dieses Eigenschaftsprofil, nämlich gleichzeitig klebende und hydrophile Eigenschaften, wird bei Verwendung der Klebstoffmischung in eine Klebefolie als Deckel von fluidischen Devices zum einen eine dauerhafte Dichte und abschließende Deckelung und zum anderen ein selbstständiges Einlaufen von z.B. Probe-, Wasch- oder Spüllösungen in die Vorrichtung gewährleistet.

Herkömmliche Kleber, die gut kleben, sind meist sehr hydrophob und erlauben somit nicht das Einsaugen bzw. den Transport von wässrigen Flüssigkeiten. Auf der anderen Seite sind herkömmliche Kleber mit ausgeprägten hydrophilen Eigenschaften oftmals schlecht klebend.

Erfindungsgemäß wird eine Klebstoffmischung bereitgestellt, welche die beiden gewünschten Eigenschaften, nämlich Hydrophilie und Klebefähigkeit miteinander vereint. Die Kombination der Eigenschaften ergibt sich durch die beiden Komponenten, nämlich durch die Verwendung eines Acrylklebers plus Zusatz eines Detergenz.

Die erfindungsgemäße Klebstoffmischung erfüllt zudem weitere für die Anwendung wichtige Kriterien. So löst sich der gewählte Zusatz, nämlich ein Detergenz, gut im Acrylkleber. Durch Zugabe des Detergenz, insbesondere in den erfindungsgemäß bevorzugten Konzentrationen, wird die Klebstoffmischung hydrophil, behält aber noch die gewünschte Klebekraft. Der Detergenzzusatz im Acrylkleber bewirkt insbesondere in den hierin angegebenen bevorzugten Konzentrationen keine Hämolyse im Blut. Durch das dem Acrylkleber zugesetzte Detergenz wird auch in Verbindung mit Wasser oder Probe kein Aufweichen oder Auflösen des Klebers bewirkt. Durch die Zugabe des Detergenz wird die Klebstoffmischung dauerhaft hydrophil gemacht und nicht nur ein kurzzeitiger Effekt erzielt. Die Klebstoffmischung selbst kann transparent bereitgestellt werden und besitzt selbst keine bzw. nur eine sehr geringen Eigenfluoreszenz. Durch die Verwendung von Detergenz und Acrylkleber ist es möglich, eine Klebstoffmischung bereitzustellen, die frei von Lösungsmitteln, insbesondere organischen Lösungsmitteln sowie Weichmachern ist. Schließlich ist die erfindungsgemäße Klebstoffmischung temperaturbeständig.

Zusammengefasst zeigt die erfindungsgemäße Klebstoffmischung eine ganze Reihe von Vorteilen auf und ist insbesondere hervorragend als Klebstoff für Klebefolien für Deckel von fluidischen Devices geeignet.

Bei der Komponente (i), dem Acrylkleber, handelt es sich insbesonders um einen Acrylsäure-haltigen Kleber und vorzugsweise um ein auf Acrylsäure basierendes Copolymer in Dispersion. Der Feststoffgehalt beträgt dabei vorzugsweise mindestens 40, mehr bevorzugt mindestens 50, insbesondere mindestens 52, und am meisten bevorzugt mindestens 53,5 und vorzugsweise bis zu 65, mehr bevorzugt bis zu 60, insbesondere bis zu 58 und am meisten bevorzugt bis zu 56,5 Gew.-%.

Die Viskosität (bei 25 °C und 50 U/min) beträgt vorzugsweise zwischen 100 mPas und 500 mPas, insbesondere zwischen 200 und 350 mPas.

Der pH-Wert des Acrylklebers, insbesondere der Dispersion, umfassend ein auf Acrylsäure basierendes Copolymer beträgt vorzugsweise zwischen 2 und 7, insbesondere zwischen 3,5 und 5,5.

Geeignete, auf Acrylsäure basierende Copolymere sind insbesondere Copolymere, basierend auf Acrylsäuremonomeren und gegebenenfalls weiteren Monomeren, z.B. ethylenisch ungesättigten Monomeren, vorzugsweise Styrol, Ethylen, Propylen, Butylen, Butaden, Hexen oder Hexadien.

Das auf Acrylsäure basierende Copolymer weist vorzugsweise wenigstens ein Monomer mit der Formel (1) CH₂=CH(R¹)(COOR²) auf, worin R¹ = H oder C₁-C₁₀ Alkyl, insbesondere Methyl und R² = H oder C₁-C₃₀ Alkyl, vorzugsweise C₁-C₁₀ Alkyl und insbesondere C₁-C₄ Alkyl. Solche Monomere werden auch als Acrylsäure, Methacrylsäure, Acrylsäureester bzw. Methacrylsäureester bezeichnet. Bevorzugte Acrylsäureester sind Methyl-, Ethyl-, Butyl-, i-Butyl- und 2-Ethylhexylacrylsäureester. Bevorzugte Methacrylsäureester (mit R¹ = Methyl) sind Methyl-, Ethyl-, Butyl-, i-Butyl- und 2-Hydroxyethylmethacrylsäureester.

Das auf Acrylsäure basierende Copolymer wird erfindungsgemäß bevorzugt zu mindestens 50 Gew.-%, mehr bevorzugt zu mindestens 80 Gew.-%, noch mehr bevorzugt zu wenigstens 85 Gew.-% und bis zu 100 Gew.-%, vorzugsweise bis zu 90 Gew.-% und in einigen Ausführungsformen bis zu 85 Gew.-% aus Monomeren der Formel (I) gebildet.

Während es erfindungsgemäß möglich ist, dass das auf Acrylsäure basierende Copolymer ausschließlich aus Monomeren der Formel (I) gebildet ist, können auch andere Monomere enthalten sein. Bevorzugt sind ethylenisch ungesättigte Comonomere, insbesondere olefinisch ungesättigte Monomere, welche wenigstens eine funktionelle Gruppe enthalten. Beispiele für solche Monomere sind Vinylester, Vinylhalogene, Vinylidenhalogene, Vinylverbindungen mit aromatischen Ringen oder Heterozyklen, wie insbesondere Vinylacetat, Vinylformamid, Vinylpyrridin, Ethylvinylether, Vinylchlorid, Vinylidenchlorid oder Acetonitril. Bevorzugte funktionelle Gruppen, welche die olefinisch ungesättigten Monomere umfassen, sind beispielsweise Hydroxil, Carboxil, Epoxy, Säureamid, Isocyanat oder Aminogruppen. In solchen Copolymeren beträgt der Gewichtsanteil an Monomeren der Formel (I) bevorzugt ≥ 50 %, mehr bevorzugt ≥ 70 %.

Als erfindungsgemäße Komponente (ii) enthält die Klebstoffmischung ein Detergenz. Das Detergenz bewirkt, dass die Klebstoffmischung insgesamt hydrophil ist und somit einen Transport von wässrigen Flüssigkeiten in Kapillaren ermöglicht. Bevorzugt ist das Detergenz in einer Menge von 1 bis 10 Gew.-%, mehr bevorzugt von 1,5 bis 6 Gew.-%, noch mehr bevorzugt von 2 bis 4 Gew.-%, und am meisten bevorzugt von 2,5 bis 3 Gew.-% bezogen auf den Feststoffgehalt des Acrylklebers in der Klebstoffmischung enthalten.

Als Detergenz wird vorzugsweise ein nichtionisches Detergenz eingesetzt. Bevorzugt sind N-D-Gluco-N-methylalkanamide, beispielsweise mit Alkanketten mit 4 bis 20 C-Atomen. Besonders bevorzugt ist Octanoyl-N-methylglucamid (C₁₅H₃₁NO₆). Gerade durch Verwendung dieses Detergenz Octanoyl-N-methylglucamid, welches auch als Mega 8 bezeichnet wird, konnten besonders gute Ergebnisse erhalten werden. Mega 8 weist keine Absorption bei 280 nm auf und führt nicht zur Denaturierung von Proteinen.

Die erfindungsgemäße Klebstoffmischung wird, wie hierin ausgeführt, insbesondere bereitgestellt zur Verwendung mit Testelementen. Sie ist aber nicht darauf beschränkt und kann überall vorteilhaft dort angewandt werden, wo gleichzeitig eine hohe Hydrophilie und gute Klebekraft einer Klebstoffmischung wünschenswert oder vorteilhaft sind.

Ein weiterer Gegenstand der vorliegenden Erfindung ist eine Klebefolie umfassend eine Trägerfolie, auf der die hierin beschriebene erfindungsgemäße Klebstoffmischung aufgebracht ist. Die Erfindung betrifft deshalb weiterhin eine Trägerfolie, beschichtet mit einer Klebstoffmischung.

Durch Aufbringen der erfindungsgemäßen Klebstoffmischung auf eine Trägerfolie wird eine Klebefolie gebildet, welche beispielsweise vorteilhaft zur Verklebung von Testelementen oder zur Abdeckelung von Testelementen eingesetzt werden kann.

Grundsätzlich sind alle glatten, nicht saugenden Folien als Material für die Trägerfolie geeignet. Bevorzugt ist die Trägerfolie eine Kunststofffolie, beispielsweise eine Folie aus Polyester, Polyethylen, Polypropylen, Polyvinylchlorid oder Polyethylentereftalat. Es ist auch möglich, eine Metallfolie als Trägerfolie einzusetzen, beispielsweise eine Gold- oder Silberfolie. Auf die Trägerfolie ist die erfindungsgemäße Klebstoffmischung vorzugsweise in einer Menge aufgebracht, so dass die Trockenschichtdicke mindestens 5 µm, mehr bevorzugt mindestens 10 µm und bevorzugt mindestens 15 µm und bis zu 500 µm, insbesondere bis zu 100 µm, vorzugsweise bis zu 50 µm und besonders bevorzugt bis zu 20 µm beträgt.

Die Trägerfolie selbst hat vorzugsweise eine Dicke von zwischen 100 µm und 1 mm, insbesondere zwischen 200 und 300 µm und beispielsweise 250 µm.

Das Aufbringen der Kunststoffmischung auf die Trägerfolie kann mittels bekannter Verfahren, beispielsweise mittels Rakelverfahren erfolgen.

Erfindungsgemäß ist es weiterhin möglich, die Klebefolie mit einem Schutzliner zu versehen, beispielsweise mit einem Schutzliner aus Polypropylen in einer Schichtdicke von 10 bis 50 µm, insbesondere 30 µm. Grundsätzlich können beliebige Schutzlinermaterialien eingesetzt werden, wobei darauf geachtet werden sollte, dass der Schutzliner keine hydrophoben Materialien auf die Klebeschicht abgibt. Aus diesem Grund sind Schutzliner, die mit einer Siliconschicht versehen sind, weniger bevorzugt.

Ein bevorzugtes Anwendungsgebiet der erfindungsgemäßen Klebstoffmischung ist der Einsatz in Testelementen. Die Erfindung betrifft deshalb auch ein Testelement umfassend eine Klebefolie, wie hierin beschrieben, oder Bestandteile, die mit einer Klebstoffmischung, wie hierin beschrieben, versehen sind.

Grundsätzlich kann es sich beim erfindungsgemäßen Testelement um ein beliebiges Testelement handeln. Vorzugsweise handelt es sich um ein diagnostisches Testelement und insbesondere um ein Testelement mit Trockenreagenzien (trockenchemisches Testelement). Besonders bevorzugt handelt es sich um ein Testelement mit Fluidikstrukturen (hierin auch als fluidisches Testelement oder fluidischer Device bezeichnet), wobei Flüssigkeitsströme durch die Fluidikstrukturen der Testelemente geleitet werden können. Die erfindungsgemäßen Testelemente können beispielsweise zur Bestimmung von Glucose, Cholesterin, Proteinen, Ketonen, Phenylalanin und Enzymen in biologischen Fluiden, wie etwa Blut, Speichel oder Urin, eingesetzt werden. Bevorzugt handelt es sich bei dem Testelement um ein scheibenförmiges Testelement, wie beispielsweise in US 2004/0265171 A1 beschrieben. Entsprechende Analysesysteme sind beispielsweise aus US 4,456,581, US 4,580,896, US 4,814,144 oder EP 1 077 771 B1 bekannt. Die erfindungsgemäße Klebstoffmischung wird dabei insbesondere in Form einer Klebefolie zur Deckelung des Testelements eingesetzt. Der erfindungsgemäße Klebedeckel kann dabei universell zur Deckelung eingesetzt werden, losgelöst von Designunterschieden oder -änderungen von Testelementen.

In einer besonders bevorzugten Ausführungsform handelt es sich bei dem Testelement um einen SID-Device, wie beispielsweise in EP 1 795 894 A1 beschrieben.

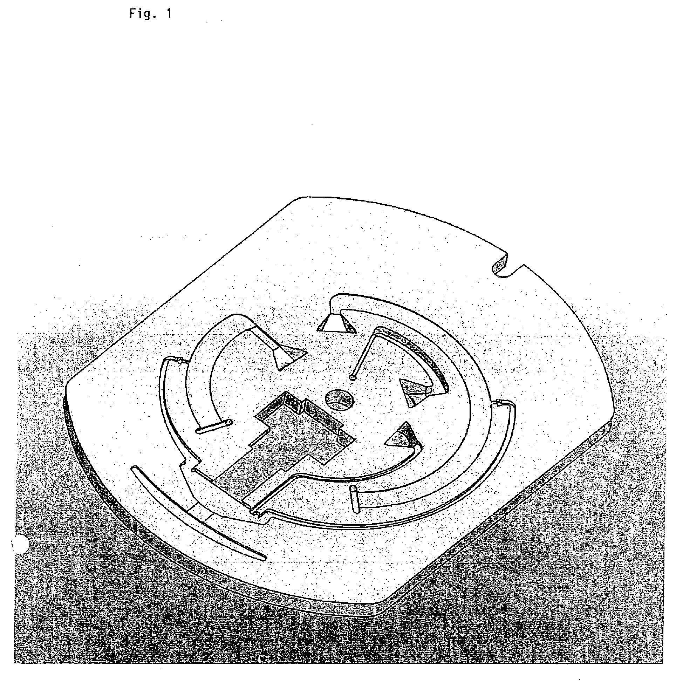

Die Erfindung wird durch die beigefügten Figuren und die folgenden Beispiele weiter beschrieben. Figur 1 zeigt den Aufbau eines erfindungsgemäßen Testelements zur Verwendung mit einer mit der hierin beschriebenen Klebstoffmischung versehenen Folie.

### Beispiel 1

Herstellung eines SID-Devices

Auf eine 250 µm starke Kunststoffträgerfolie wurde eine Klebstoffmischung (Ucecryl WB 3171 Kleber) umfassend ein auf Acrylsäure basierendes Copolymer, versetzt mit dem Detergenz Mega 8, mittels Rakelverfahren aufgebracht und 8 Minuten bei 110 °C getrocknet. Die Trockenschichtdicke der Klebstoffmischung beträgt ca. 15 µm. Die Kunststoffträgerfolie mit der aufgebrachten Klebstoffmischung wurde anschließend mit einem Schutzliner versehen.

Zur Verwendung im SID-Device wurde aus der Klebefolie mit Hilfe eines Schneidplotters ein passgenauer Deckel herausgeschnitten und auf das Device geklebt. Funktionstests ergaben ein selbstständiges Einlaufen einer Blutprobe in den Device.

Die hydrophile Eigenschaft des auf die Trägerfolie geschichteten Klebers wurde mittels Kontaktwinkelmessung bestimmt. Für Konzentrationen des Detergenz Mega 8 von 2 Gew.-% bis 4 Gew.-%, bezogen auf den Feststoffgehalt des Klebers, liegt der Kontaktwinkel im Bereich von 16 bis 34 °.

## Patentansprüche

1. Klebstoffmischung umfassend
(i) einen Acrylkleber und
(ii) ein Detergenz.

2. Klebstoffmischung nach Anspruch 1,
**dadurch gekennzeichnet,**
**dass** es sich bei dem Detergenz um ein nichtionisches Detergenz handelt.

3. Klebstoffmischung nach einem der vorhergehenden Ansprüche,
**dadurch gekennzeichnet,**
**dass** das Detergenz in einer Menge von 2 Gew.-% bis 4 Gew.-% bezogen auf den Feststoffgehalt des Acrylklebers in der Klebstoffmischung enthalten ist.

4. Klebstoffmischung nach einem der vorhergehenden Ansprüche,
**dadurch gekennzeichnet,**
**dass** es sich bei dem Detergenz um Octanoyl-N-methylglucamid handelt.

5. Klebstoffmischung nach einem der vorhergehenden Ansprüche,
**dadurch gekennzeichnet,**
**dass** es sich bei dem Acrylkleber um eine Dispersion eines auf Acrylsäure basierenden Copolymers handelt.

6. Klebstoffmischung nach einem der vorhergehenden Ansprüche,
**dadurch gekennzeichnet,**
**dass** die Dispersion einen Feststoffgehalt von 40 bis 65 Gew.-% aufweist.

7. Acrylkleber nach einem der vorhergehenden Ansprüche,
**dadurch gekennzeichnet,**
**dass** das auf Acrylsäure basierende Copolymer aus wenigstens einem der Monomere der Formel (I) gebildet ist:
CH₂=CH(R¹)(COOR²) (I)
worin R¹ = H oder C₁-C₁₀ Alkyl, R² = H oder C₁-C₃₀ Alkyl.

8. Klebstoffmischung nach einem der vorhergehenden Ansprüche,
**dadurch gekennzeichnet,**
**dass** das auf Acrylsäure basierende Copolymer wenigstens eines der folgenden Monomere aufweist: Acrylsäure, einen Acrylsäureester ausgewählt aus Methyl-, Ethyl-, Butyl-, i-Butyl und 2-Ethylhexylacrylsäureester, Methacrylsäure oder/und einen Methacrylsäureester ausgewählt aus Methyl-, Ethyl-, Butyl-, i-Butyl und 2-Hydroxyethylmethacrylsäureester.

9. Klebefolie umfassend eine Trägerfolie, beschichtet mit einer Klebstoffmischung nach einem der vorhergehenden Ansprüche.

10. Klebefolie nach Anspruch 9,
**dadurch gekennzeichnet,**
**dass** die Trockenschichtdicke der Klebstoffmischung auf der Trägerschichtfolie 5 bis 50 µm beträgt.

11. Klebefolie nach einem der Ansprüche 9 oder 10,
**dadurch gekennzeichnet,**
**dass** die Trägerfolie aus einem Kunststoff, insbesondere Polyester, Polyethylen, Polypropylen, Polyvenylchlorid oder Polyethylentereftalat oder einer Metallfolie, insbesondere einer Goldfolie oder Silberfolie besteht.

12. Testelement umfassend eine Klebefolie nach einem der Ansprüche 9 bis 11 oder/und Bestandteile, die mit einer Klebstoffmischung nach einem der Ansprüche 1 bis 8 versehen ist.

13. Testelement nach Anspruch 12
**dadurch gekennzeichnet,**
**dass** es sich um ein Testelement mit Fluidikstrukturen handelt.

14. Testelement nach einem der Ansprüche 12 oder 13,
**dadurch gekennzeichnet,**
**dass** es eine mit einer Klebstoffmischung nach einem der Ansprüche 1 bis 8 beschichtete Folie als Deckel aufweist.
